# EUROPEAN PATENT APPLICATION

(11) **EP 2 746 961 A1**
(43) Date of publication of application: **25.06.2014**
(21) Application number: 12197884.5
(22) Date of filing: 18.12.2012
(51) Int. Cl.: G06F 17/30, G06F 3/048

(54) **Selection of files for album creation on electronic devices**

(71) Applicant: BlackBerry Limited, Waterloo, ON N2K 0A7 (CA)
(72) Inventor: Martin, Daryl Joseph, Waterloo, Ontario N2L 3W8 (CA); O'Neill, Conor Michael, Waterloo, Ontario N2L 3W8 (CA); Cietwierkowski, Marcin, Waterloo, Ontario N2L 3W8 (CA)
(74) Representative: Greenaway, Martin William

(57) **Abstract**

A method [400] of selecting a group of files [120] on an electronic device [100] The method [400] includes rendering a slide bar [170] on a display [140] of the electronic device [100], the slide bar [170] configured to display a time period [370] corresponding to a temporal characteristic of one or more of multiple files [120] stored in memory [160] of the electronic device [100], responsive to user [190] manipulation of the slide bar [170] adjusting the time period [370] represented by the slide bar [170], and responsive to user [190] input creating an album [110] and placing the files [120] having temporal characteristic within the adjusted time period [370] in the album [110].

## Description

### FIELD OF THE INVENTION

The present invention relates generally to electronic devices and more specifically to the selection of files for albums on such devices.

### BACKGROUND

Modern electronic devices such as cell phones, smart phones, and digital cameras may be used to capture photographic still images and video segments. These mobile electronic devices often have a fixed or removable electronic memory component that has a relatively large storage capacity. Such large capacity memory components provide a user with the ability to store on the devices large numbers of files such as digital photographs and video files. In particular, it is now possible for a user to store several thousand separate digital photographs on a single memory chip prior to their deletion or transfer to a more permanent storage device. In general, each image is assigned a sequentially ordered file name by the mobile device as that image is captured.

Users accordingly tend to have hundreds of pictures and videos stored in their default camera memory location. Moreover, cellular telephones and smart phones with their larger memories can also have numerous pictures and videos stored in memory. Organizing such large numbers of pictures and videos can be very time consuming and tedious as the items are often selected and manually moved into directories one at a time or in small groups.

### BRIEF DESCRIPTION OF THE DRAWINGS

The accompanying drawings provide visual representations which will be used to more fully describe various representative embodiments and can be used by those skilled in the art to better understand the representative embodiments disclosed herein and their inherent advantages. In these drawings, like reference numerals identify corresponding elements.

Figure 1 is a drawing of a block diagram of an electronic device configured for album creation of date related files as described in various representative embodiments.

Figure 2 is another drawing of the mobile electronic device of Figure 1.

Figure 3 is a drawing of the slide bar of the mobile electronic device of Figure 1.

Figure 4 is a flow chart of a method for selecting a group of captured date related files on a mobile electronic device as described in various representative embodiments.

Figure 5 is a flow chart of another method for selecting a group of captured date related files on a mobile electronic device as described in various representative embodiments.

### DETAILED DESCRIPTION

As shown in the drawings for purposes of illustration and as described below, novel techniques are disclosed for selecting files such as photographic or video files for subsequent placement in created albums on an electronic device which could be a mobile electronic device. Users tend to have hundreds of pictures and videos stored in their default camera memory location. Cellular telephones and smart phones now with their larger memories can also have numerous pictures and videos stored in their memories. Organizing such large numbers of pictures and videos can be very time consuming and tedious as the items are often selected and manually moved into directories one at a time or in small groups. Thus, there is a need for a better way to select files which could be photographic items such as pictures and videos for subsequent placement in created albums on mobile electronic devices.

It can be assumed that photographs and videos taken over given time periods are related to specific events. For example, a trip to Europe would include pictures taken over the span of the trip, perhaps a week or so. Whereas, a party might cover the span of an evening. As disclosed herein, a user is provided access to a slider bar at the bottom or other location of a display of a mobile electronic device. The slider bar designates a time period which can be expanded and contracted by the user. The time period displayed designates a range of times within which a group of files stored in the mobile device memory were captured. As the user adjusts the displayed time period, the group of files associated via their capture times adjusts accordingly. Once the user has adjusted the time period to his/her satisfaction, he/she is prompted to assign an album name. Subsequently, the associated files will be copied or moved into the album.

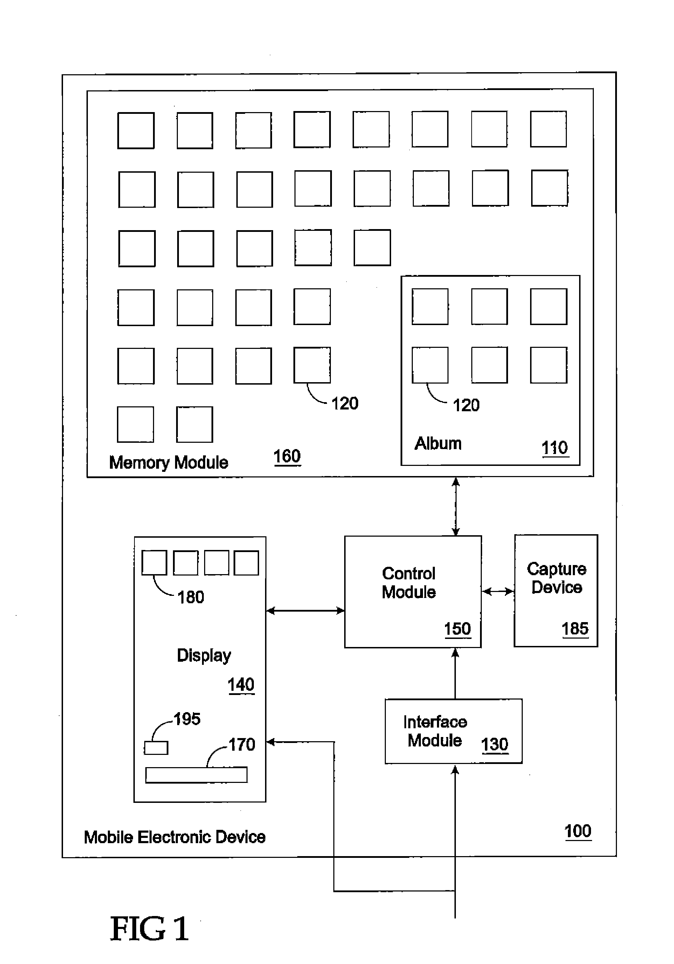

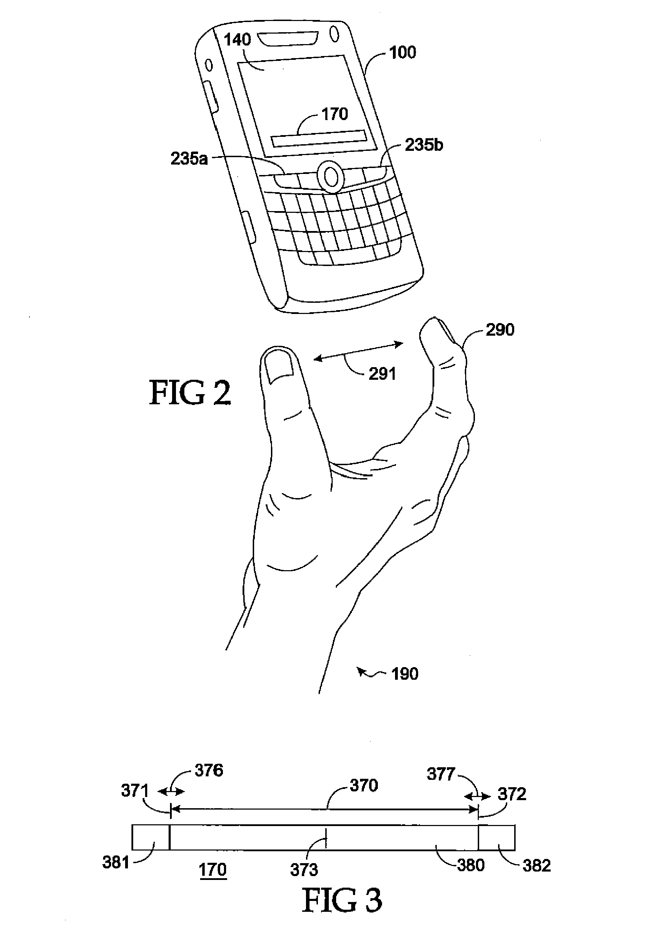

Figure 1 is a drawing of a block diagram of an electronic device **100** configured for album **110** creation of date related files **120** as described in various representative embodiments. The electronic device **100** could be a mobile electronic device **100** and will be referred to in the following as such. However, the electronic device **100** is not limited to mobile electronic devices **100.** The mobile electronic device **100** could be a cellular telephone **100,** a smart phone **100,** a digital camera **100,** or other appropriate mobile electronic device **100.** The date related files **120** could be photographic items **120** such as photographs **120** and videos **120** or other appropriate files **120.** The mobile electronic device **100** comprises an interface module **130,** a display **140** which in representative embodiments could be a touchscreen **140,** a control module **150** which is also referred to herein as a processor **150,** and a memory module **160.** The interface module **130** is accessible to a user **190** (see Figure 2). In alternative embodiments, the display **140** is also accessible to the user **190.** The interface module **130,** the display **140,** and the memory module **160** are coupled to the control module **150.**

The memory module **160** is configured for storing multiple files **120** in captured sequence. The files **120** could be photographs or videos. The display **140** is configured for presentation of a slide bar **170,** for optional presentation of representations **180** of one or more date related files **120** stored in the memory module **160,** and for optional presentation of an item counter **195** which indicates the number of files **120** that have a temporal characteristic lying within the time period **370** (see Figure 3) indicated by the slide bar **170.** The temporal characteristic of each of the files **120** could be the capture time, the storage time, the modification time of the file **120,** or other appropriate file **120** temporal characteristic. In the following, the temporal characteristic of a file **120** will be referred to as the capture time but is not limited to such. For ease and clarity of illustration only one of the optional representations **180** shown in Figure 1 is identified via its identifying number. The user **190** can provide instructions to the mobile electronic device **100** via the slide bar **170** on the display **140** or via the interface module **130.** User **190** instructions provided via the slide bar **170** on the display **140** and the interface module **130** are transferred to the control module **150.** The control module **150** communicates with the memory module **160.** As will be discussed more fully with the description of Figure 2, the instructions from the user **190** via the slide bar **170** can result in the creation of one or more albums **110** and the subsequent placement of one or more files **120** in the created albums **110.** For ease and clarity of illustration only one of the files **120** shown stored in the memory module **160** is identified via its identifying number in Figure 1, and only one of the files **120** shown stored in the album **110** is identified via its identifying number in Figure 1. The memory module **160** could comprise multiple albums **110.** The mobile electronic device **100** can also comprise a capture device **185** configured for capturing the files **120** which are then stored by capture date and time in the memory module **160.** The capture device **185** is coupled to the control module **150** in the representative embodiment of Figure 1.

Figure 2 is another drawing of the mobile electronic device **100** of Figure 1. The slide bar **170** displayed on the display **140** of the mobile electronic device **100** represents a time period which can be adjusted via movement **291** of the fingers **290** of the user **190** on or in proximity to the slide bar **170** or alternatively the time period can be adjusted via activation of adjustment keys **235a, 235b** on the interface module **130.** The time period delineated on the slide bar **170** corresponds to the capture time of one or more of the files **120.** By adjusting the time period displayed on the slide bar **170,** a group of files **120** stored on the mobile electronic device **100** can be selected. In response to instructions from the user **190** an album **110** can be created for those files **120** having capture times delineated by the time period displayed on the slide bar **170** and those files **120** can be subsequently placed in the album **110.**

Figure 3 is a drawing of the slide bar **170** of the mobile electronic device **100** of Figure 1. The slide bar **170** presents time bar **380** having a start time **371** and an end time **372** that delineate a time period **370.** The start time **371** and end time **372** are separately adjustable **376, 377** by the user **190.** The slide bar **170** can also comprise a preceding segment bar **381** representing a time segment preceding that of the time period **370** and a succeeding segment bar **382** representing a time segment succeeding that of the time period **370.** In a representative embodiment, one of the files **120** could be selected which then identifies a first time **373.** The slide bar **170** could then be expanded about this first time **373** at the user's **190** discretion to include additional files **120.**

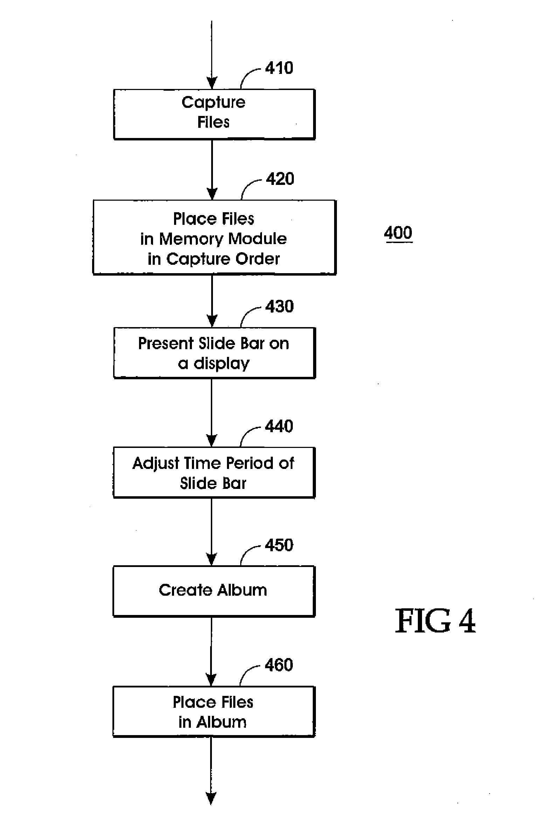

Figure 4 is a flow chart of a method **400** for selecting a group of captured date related files **120** on a mobile electronic device **100** as described in various representative embodiments. The mobile electronic device **100** could be a cellular telephone **100,** a smart phone **100,** a digital camera **100,** or other appropriate mobile electronic device **100.** The date related files **120** could be photographic items **120** such as photographs **120** and videos **120** or other appropriate files **120.** In block **410** of Figure 4, various files **120** are captured by a capture device **185** on the mobile electronic device **100.** Block **410** then transfers control to block **420.**

In block **420,** the files **120** are stored in a memory module **160** on the mobile electronic device **100** in captured sequence. Block **420** then transfers control to block **430.**

In block **430,** a slide bar **170** is presented on a display **140** which could be a touchscreen **140** of the mobile electronic device **100.** The slide bar **170** displays a time period **370** corresponding to the capture time of one or more of the multiple files **120.** Block **430** then transfers control to block **440.**

In block **440,** responsive to movement **291** of a user's **190** fingers **290** on or in proximity to the slide bar **170** or alternatively responsive to activation of adjustment keys **235a, 235b,** the time period **370** represented by the slide bar **170** is adjusted. In a representative embodiment, one of the files **120** could be selected which then identifies a first time **373.** The slide bar **170** could then be expanded about this first time **373** at the user's **190** discretion to include additional files **120.** In another representative embodiment, the user **190** could adjust whatever time period **370** the control module **150** presented on the display **140.** Block **440** then transfers control to block **450.**

In block **450,** responsive to user **190** instructions, an album **110** is created in the memory module **160** on the mobile electronic device **100.** Block **450** then transfers control to block **460.**

In block **460,** responsive to user **190** instructions, all files **120** captured within the adjusted time period **370** are placed in the album **110.** Block **460** then terminates the process.

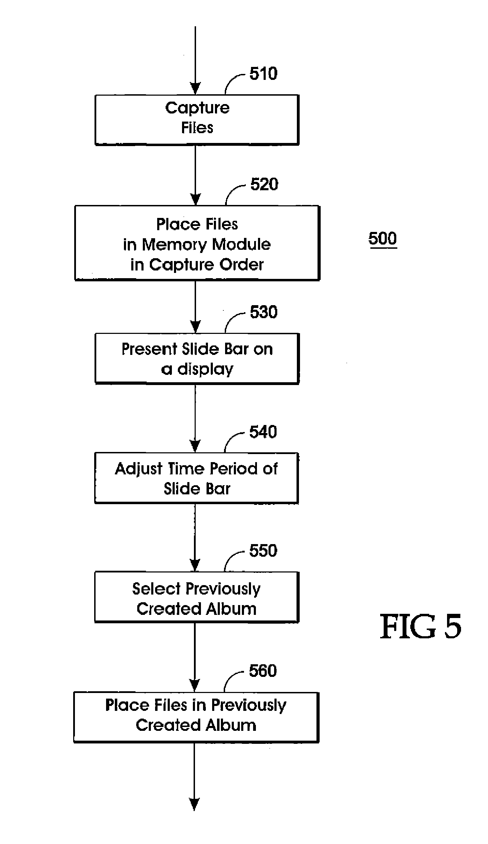

Figure 5 is a flow chart of a method **500** for selecting a group of captured date related files **120** on a mobile electronic device **100** as described in various representative embodiments. The mobile electronic device **100** could be a cellular telephone **100,** a smart phone **100,** a digital camera **100,** or other appropriate mobile electronic device **100.** The date related files **120** could be photographic items **120** such as photographs **120** and videos **120** or other appropriate files **120.** In block **510** of Figure 5, various files **120** are captured by a capture device **185** on the mobile electronic device **100.** Block **510** then transfers control to block **520.**

In block **520,** the files **120** are stored in a memory module **160** on the mobile electronic device **100** in captured sequence. Block **520** then transfers control to block **530.**

In block **530,** a slide bar **170** is presented on a display **140** which could be a touchscreen **140** of the mobile electronic device **100.** The slide bar **170** displays a time period **370** corresponding to the capture time of one or more of the multiple files **120.** Block **530** then transfers control to block **540.**

In block **540,** responsive to movement **291** of a user's **190** fingers **290** on or in proximity to the slide bar **170** or alternatively responsive to activation of adjustment keys **235a, 235b,** the time period **370** represented by the slide bar **170** is adjusted. In a representative embodiment, one of the files **120** could be selected which then identifies a first time **373.** The slide bar **170** could then be expanded about this first time **373** at the user's **190** discretion to include additional files **120.** In another representative embodiment, the user **190** could adjust whatever time period **370** the control module **150** presented on the display **140.** Block **540** then transfers control to block **550.**

In block **550,** responsive to user **190** instructions, select a previously created album **110** in the memory module **160** on the mobile electronic device **100.** Block **550** then transfers control to block **560.**

In block **560,** responsive to user **190** instructions, all files **120** captured within the adjusted time period **370** except any that were previously placed in the previously created album **110** are placed in the previously created album **110.** Block **560** then terminates the process.

The memory module **160** is configured for storing multiple files **120** in captured sequence. The files **120** could be photographs or videos. The touchscreen **140** is configured for presenting the slide bar **170.**

In another representative embodiment, a non-transitory computer-readable medium **160** is disclosed. The non-transitory computer-readable medium has computer-executable instructions for causing a computer which includes a processor **150** and associated memory **160** to carry out a method **400** for selecting a group of captured files **120** on a mobile electronic device **100.** The method **400** includes presenting a slide bar **170** on a display **140,** responsive to user **190** input adjusting the time period **370** represented by the slide bar **170,** and responsive to user **190** instructions, creating an album **110** and placing all files **120** captured within the adjusted time period in the album **110.** The multiple files **120** are stored in a memory module **160** in captured sequence; the display **140** and the memory module **160** are components of the mobile electronic device **100;** and the slide bar **170** displays a time period **370** corresponding to the capture time of one or more of the multiple files **120.**

As previously stated, while the electronic device **100** is referred to in the above as a mobile electronic device **100,** the electronic device **100** is not limited to mobile electronic devices **100.** It could be a computer **100** or other appropriate electronic device **100.** Also as previously stated, while the temporal characteristic of each of the files **120** is referred to above as the capture time, it could also be the storage time of the file **120,** the modification time of the file **120,** or other appropriate file **120** temporal characteristic.

In light of the above, it can be seen that in accordance with aspects of the disclosure an electronic device **100** includes a memory **160** configured for storing multiple files **120** based on a temporal characteristic of each file **120** and a processor **150** configured to render a slide bar **170** on a display **140,** the slide bar **170** representing a time period **370** adjustable by a user **190** that corresponds to the temporal characteristic of one or more of the multiple files **120,** the processor **150** further configured to create an album **110** responsive to a user directive and to place the files **120** having temporal characteristic within the adjusted time period **370** in the album **110.**

In accordance with various aspects of the disclosure a method **400** for selecting a group of captured files **120** on an electronic device **100** is provided. The method **400** includes rendering a slide bar **170** on a display **140** of the electronic device **100,** the slide bar **170** configured to display a time period **370** corresponding to a temporal characteristic of one or more of multiple files **120** stored in memory **160** of the electronic device **100** in sequence, responsive to user manipulation of the slide bar **170,** adjusting the time period **370** displayed, and responsive to user input, creating an album **110** and placing the files **120** having temporal characteristic within the adjusted time period **370** in the album **110.**

In accordance with various aspects of the disclosure, a non-transitory computer-readable medium **160** is further provided. The non-transitory computer-readable medium **160** has computer-executable instructions for causing a computer which includes a processor **150** and associated memory **100** to carry out a method **400** on an electronic device **100.** The method **400** comprises rendering a slide bar **170** on a display **140** of the electronic device **100,** the slide bar **170** configured to display a time period **370** corresponding to a temporal characteristic of one or more of multiple files **120** stored in memory **100** of the electronic device **100** in sequence, responsive to user manipulation of the slide bar **170,** adjusting the time period **370** displayed, and responsive to user input, creating an album **110** and placing the files **120** having temporal characteristic within the adjusted time period **370** in the album **110.**

The representative embodiments, which have been described in detail herein, have been presented by way of example and not by way of limitation. It will be understood by those skilled in the art that various changes may be made in the form and details of the described embodiments resulting in equivalent embodiments that remain within the scope of the appended claims.

## Claims

1. An electronic device **[100],** comprising:
memory **[160]** configured for storing multiple files **[120]** based on a temporal characteristic of each file **[120];** and
a processor **[150]** configured to render a slide bar **[170]** on a display **[140],** the slide bar **[170]** representing an adjustable time period **[370]** that corresponds to the temporal characteristic of one or more of the multiple files **[120],** the processor **[150]** further configured to create an album **[110]** responsive to a user **[190]** directive and to place the files **[120]** within the adjusted time period **[370]** in the album **[110]** in accordance with the temporal characteristic of each file **[120].**

2. The electronic device **[100]** of claim 1, wherein the time period **[370]** displayed is adjustable via manual activation of adjustment keys **[235a,235b]** on the electronic device **[100].**

3. The electronic device **[100]** of claim 1, wherein the display **[140]** is a touchscreen **[140]** and wherein the time period **[370]** displayed is adjustable via movement of the user's **[190]** fingers **[290]** on or in proximity to the slide bar **[170]** on the touchscreen **[140].**

4. The electronic device **[100]** of claim 1, wherein the temporal characteristic comprises the file's **[120]** capture time, storage time, or modification time.

5. The electronic device **[100]** of claim 1 wherein the electronic device **[100]** is one or more of a cellular telephone **[100],** a smart phone **[100],** and a digital camera **[100].**

6. The electronic device **[100]** of claim 1 wherein the processor **[150]** is further configured to render a representation of one or more of the multiple files **[120]** having temporal characteristics within the time period **[370]** and/or to render an item counter **[195]** configured for displaying the number of files **[120]** having temporal characteristics within the time period **[370].**

7. The electronic device **[100]** of claim 1 wherein the multiple files **[120]** are photographic items **[120]** comprising one or more digital photographs **[120]** and/or digital videos **[120].**

8. The electronic device **[100]** of claim 1, wherein the multiple files **[120]** are stored in captured sequence in accordance with the temporal characteristic of each file **[120].**

9. A method **[400]** for selecting a group of files **[120]** on an electronic device **[100],** comprising:
rendering a slide bar **[170]** on a display **[140]** of the electronic device **[100],** the slide bar **[170]** configured to display a time period **[370]** corresponding to a temporal characteristic of one or more of multiple files **[120]** stored in memory **[160]** of the electronic device **[100];**
responsive to user **[190]** manipulation of the slide bar **[170],** adjusting the time period **[370]** displayed; and
responsive to user **[190]** input, creating an album **[110]** and placing the files **[120]** having temporal characteristic within the adjusted time period **[370]** in the album **[110].**

10. The method **[400]** of claim 9, wherein the display **[140]** is a touchscreen **[140]** and wherein the time period **[370]** displayed is adjusted via movement of the user's **[190]** fingers **[290]** on or in proximity to the slide bar **[170]** on the touchscreen **[140].**

11. The method **[400]** of claim 9, wherein the temporal characteristic comprises the file's **[120]** capture time, storage time, or modification time.

12. The method **[400]** of claim 9, wherein the electronic device **[100]** is one or more of a cellular telephone **[100],** a smart phone **[100],** and a digital camera **[100].**

13. The method **[400]** of claim 9, further comprising:
rendering on the touchscreen **[140]** a representation of one or more of the multiple files **[120]** having temporal characteristics in the time period **[370].**

14. The method **[400]** of claim 9, wherein the multiple files **[120]** are photographic items **[120]** comprising one or more digital photographs **[120]** and/or digital videos **[120].**

15. The method **[400]** of claim 9, wherein the one or more of multiple files **[120]** are stored in captured sequence in memory **[160]** of the electronic device **[100]** in accordance with the temporal characteristic of each of the one or more of multiple files **[120].**

## Amended claims

### Amended claims in accordance with Rule 137(2) EPC.

**1.** An electronic device [100], comprising:
memory **[160]** configured for storing multiple files **[120]** based on a temporal characteristic of each file **[120];** and
a processor **[150]** configured to render a slide bar [170] on a display **[140],** the slide bar **[170]** representing an adjustable time period [370] that corresponds to the temporal characteristic of one or more of the multiple files **[120],** the processor **[150]** further configured to create an album **[110]** in the memory responsive to a user **[190]** directive and to place the files **[120]** within the adjusted time period **[370]** in the album **[110]** in accordance with the temporal characteristic of each file **[120].**

**2.** The electronic device **[100]** of claim 1, wherein the time period **[370]** displayed is adjustable via manual activation of adjustment keys **[235a,235b]** on the electronic device **[100]**.

**3.** The electronic device **[100]** of claim 1, wherein the display **[140]** is a touchscreen **[140]** and wherein the time period **[370]** displayed is adjustable via movement of the user's **[190]** fingers **[290]** on or in proximity to the slide bar **[170]** on the touchscreen **[140].**

**4.** The electronic device **[100]** of claim 1, wherein the temporal characteristic comprises the file's **[120]** capture time, storage time, or modification time.

**5.** The electronic device **[100]** of claim 1 wherein the electronic device **[100]** is one or more of a cellular telephone **[100],** a smart phone **[100],** and a digital camera **[100].**

**6.** The electronic device **[100]** of claim 1 wherein the processor **[150]** is further configured to render a representation of one or more of the multiple files **[120]** having temporal characteristics within the time period [370] and/or to render an item counter **[195]** configured for displaying the number of files [120] having temporal characteristics within the time period **[370].**

**7.** The electronic device **[100]** of claim 1 wherein the multiple files **[120]** are photographic items **[120]** comprising one or more digital photographs **[120]** and/or digital videos **[120].**

**8.** The electronic device **[100]** of claim 1, wherein the multiple files **[120]** are stored in captured sequence in accordance with the temporal characteristic of each file **[120].**

**9.** A method **[400]** for selecting a group of files **[120]** on an electronic device [100], comprising:
rendering a slide bar **[170]** on a display **[140]** of the electronic device **[100],** the slide bar **[170]** configured to display a time period [370] corresponding to a temporal characteristic of one or more of multiple files [120] stored in memory **[160]** of the electronic device **[100];**
responsive to user **[190]** manipulation of the slide bar **[170],** adjusting the time period [370] displayed; and
responsive to user **[190]** input, creating an album **[110]** in the memory and placing the files **[120]** having temporal characteristic within the adjusted time period [370] in the album **[110].**

**10.** The method **[400]** of claim 9, wherein the display [140] is a touchscreen **[140]** and wherein the time period **[370]** displayed is adjusted via movement of the user's **[190]** fingers **[290]** on or in proximity to the slide bar **[170]** on the touchscreen **[140].**

**11.** The method **[400]** of claim 9, wherein the temporal characteristic comprises the file's **[120]** capture time, storage time, or modification time.

**12.** The method **[400]** of claim 9, wherein the electronic device **[100]** is one or more of a cellular telephone **[100],** a smart phone **[100],** and a digital camera **[100].**

**13.** The method **[400]** of claim 9, further comprising:
rendering on the touchscreen **[140]** a representation of one or more of the multiple files **[120]** having temporal characteristics in the time period **[370].**

**14.** The method **[400]** of claim 9, wherein the multiple files **[120]** are photographic items **[120]** comprising one or more digital photographs [120] and/or digital videos **[120].**

**15.** The method **[400]** of claim 9, wherein the one or more of multiple files **[120]** are stored in captured sequence in memory **[160]** of the electronic device **[100]** in accordance with the temporal characteristic of each of the one or more of multiple files **[120].**
